# EUROPÄISCHE PATENTSCHRIFT

(11) **EP 3 311 949 B1**
(45) Veröffentlichungstag und Bekanntmachung des Hinweises auf die Patenterteilung: **20.07.2022**
(21) Anmeldenummer: 17196318.4
(22) Anmeldetag: 13.10.2017
(51) Int. Cl.: B23Q 3/157, B23B 3/00, B23Q 11/00, B23Q 11/08

(54) **VERFAHREN ZUM BEARBEITEN EINES WERKSTÜCKS SOWIE EINE WERKZEUGMASCHINE ZUR DURCHFÜHRUNG DES VERFAHRENS**
METHOD FOR PROCESSING A WORKPIECE AND MACHINE TOOL FOR CARRYING OUT THE METHOD
PROCÉDÉ DE TRAITEMENT D'UNE PIÈCE À USINER ET MACHINE-OUTIL DESTINÉE À L'EXÉCUTION DU PROCÉDÉ

(30) Priorität: 18.10.2016 DE 102016119778
(43) Veröffentlichungstag der Anmeldung: 25.04.2018
(73) Patentinhaber: ELHA-Maschinenbau Liemke KG, 33161 Hövelhof (DE)
(72) Erfinder: WOLKE, Meinolf, 33129 Delbrück (DE)
(74) Vertreter: Kleine, Hubertus

(56) Entgegenhaltungen:
- EP-A1- 1 504 845
- GB-A- 2 283 697
- US-A- 5 181 898

## Beschreibung

Die Erfindung betrifft ein Verfahren zur Bearbeitung eines Werkstücks gemäß dem Oberbegriff des Anspruchs 1 sowie eine Werkzeugmaschine zur Durchführung des Verfahrens gemäß dem Oberbegriff des Anspruchs 5.

Aus dem Stand der Technik sind Werkzeugmaschinen bekannt, mit mindestens einem Werkzeugrevolver, dessen einzelne Werkzeuge in einer quer zur Drehachse des Werkzeugrevolvers angeordneten Gruppe in gleichem Winkelabstand, vorzugsweise 60°, angeordnet sind.

Jeweils ein Werkzeug einer Gruppe ist über einen im Werkzeugrevolver angeordneten Motor antreibbar, wobei die Werkzeuge als spangebende Werkzeuge, insbesondere zur Metallbearbeitung, ausgebildet sind, wie Bohrer, Fräser oder dergleichen.

Zu einem Werkzeugwechsel wird der Werkzeugrevolver um seine Drehachse so weit verdreht, dass das zu wechselnde Werkzeug in den Greifbereich eines Werkzeugwechslers gerät, mittels dem das stillstehende Werkzeug entnommen und ein neues Werkzeug eingesetzt wird.

Die einzelnen aufgezählten Verfahrensschritte erfolgen bisher nacheinander, wobei als weiterer Verfahrensschritt eine Reinigung des Werkzeugrevolvers bzw. eines das Werkzeug aufnehmenden, mit dem Motor in Verbindung bringbaren Adapters gleichfalls in einem separaten Schritt erfolgt.

Forderungen gehen dahin, die Bearbeitungszeiten zu verkürzen, um so die Fertigungskosten weiter zu senken. Dieser Forderung stehen die genannten nacheinander erfolgenden Verfahrensschritte allerdings entgegen.

In der EP 1 504 845 A1 ist ein Verfahren zum Reinigen einer Werkzeugaufnahme in einem Werkzeugrevolver offenbart. Dabei ist in einer Ebene quer zur Drehachse des Werkzeugrevolvers lediglich ein einziges drehbares Werkzeug angeordnet, wobei die Reinigung vor einem Bearbeitungseingriff des Werkzeuges erfolgt.

Aus der GB 2 283 697 A, die die Basis für den Oberbegriff der Ansprüche 1 und 5 bildet, ist eine Werkzeugmaschine mit einem Werkzeugrevolver bekannt, bei der in einer Ebene quer zur Drehachse des Werkzeugrevolvers mehrere drehbare Werkzeuge angeordnet sind.

Der Erfindung liegt die Aufgabe zugrunde, ein Verfahren der gattungsgemäßen Art so weiterzuentwickeln, dass die Nebenzeiten verkürzt und damit Fertigungskosten gesenkt werden.

Diese Aufgabe wird durch ein Verfahren mit den Merkmalen des Anspruchs 1 sowie mit einer Werkzeugmaschine zur Durchführung des Verfahrens nach Anspruch 5 gelöst.

Durch die Gleichzeitigkeit des Bearbeitungseingriffs eines Werkzeugs, der Entnahme eines nicht in Bearbeitungseingriff stehenden benachbarten Werkzeugs, die Reinigung des dazu benachbarten Adapters sowie eine erneute Bestückung des Adapters bzw. des Werkzeugrevolvers mit einem Werkzeug, wird eine deutlich verringerte Fertigungszeit insgesamt erreicht, die zu einer signifikanten Senkung der Fertigungskosten führt.

Nach einem weiteren Gedanken der Erfindung wird das nach einer Reinigung eingespannte Werkzeug vor einem Bearbeitungseingriff angetrieben und/oder das jeweilige Werkzeug nach dem Bearbeitungseingriff abgebremst, wobei die "und-Arbeitsschritte" bevorzugt sind.

Beispielhaft sei erwähnt, dass, wie sich überraschend gezeigt hat, mit dem erfindungsgemäßen Verfahren eine Span-Zu-Spanzeit, d.h. die Zeit vom Eingriff des einen Werkzeugs bis zum Eingriff eines folgenden Werkzeugs ≤ 1 Sekunde beträgt, wobei die Beschleunigung des Werkzeugs vor dem Bearbeitungseingriff auf eine Umdrehung von beispielsweise 16000 1/min und im Falle des Abbremsens von dieser Drehzahl auf Null erfolgt.

Eine Werkzeugmaschine zur Durchführung des Verfahrens weist mindestens einen um seine Längsachse verdrehbaren Werkzeugrevolver auf, mit mindestens einer Gruppe von in Umfangsrichtung angeordneten, jeweils ein Werkzeug aufnehmenden, lösbaren Werkzeugspindeln.

Dabei erfolgt ein Austausch der Werkzeuge mittels eines Werkzeugwechslers, der Bestandteil der Werkzeugmaschine ist.

Die Werkzeuge selbst sind in an sich bekannter Weise in einer Werkzeugspindel gehalten, die lösbar am Werkzeugrevolver unter Zwischenschaltung eines Adapters befestigt ist. Dieser Adapter dient quasi als Koppelelement zum Antriebsmotor, der im Werkzeugrevolver positioniert ist und das jeweilige Werkzeug antreibt.

Gemäß der Erfindung weist die Werkzeugmaschine, dem Werkzeugrevolver zugeordnet, einen Bearbeitungs- und einen Reinigungsraum auf, die derart voneinander getrennt sind, dass bei der Reinigung anfallende Späne oder dergleichen nicht in den Bearbeitungsraum gelangen können oder umgekehrt. Bevorzugt ist hierzu eine Trennwand vorgesehen, die sich etwa mittig zum Werkzeugrevolver erstreckt, wobei allerdings die Möglichkeit geschaffen ist, dass bei der Verdrehung des Werkzeugrevolvers um eine Drehachse die Werkzeuge ungehindert vom Bearbeitungsraum in den Reinigungsraum und umgekehrt gelangen können.

Um die genannte Span-Zu-Spanzeit zu erreichen, wird das Werkzeug mit dem angeschlossenen Adapter bei laufendem Antriebsmotor des Werkzeugrevolvers entnommen und der bereits vorauseilend in Rotation versetzte Folgeadapter mit dem nächsten Werkzeug von der noch rotierenden Motorspindel aufgenommen.

Hierzu muss der Adapter außerhalb der Motorspindel vorauseilend in Drehung versetzt und nacheilend abgebremst, und positioniert gestoppt werden.

Die Reinigung im Reinigungsraum erfolgt vorzugsweise mittels Druckluft, wobei nach dem Einsetzen eines neuen Werkzeugs eine Sitzkontrolle erfolgt, durch die die genaue Anordnung des Werkzeugs im Werkzeugrevolver überprüfbar ist.

Weitere vorteilhafte Ausbildungen der Erfindung sind in den Unteransprüchen gekennzeichnet.

Das erfindungsgemäße Verfahren sowie ein Teil einer erfindungsgemäßen Werkzeugmaschine werden nachfolgend anhand der beigefügten Zeichnungen nochmals beschrieben.

Es zeigen:

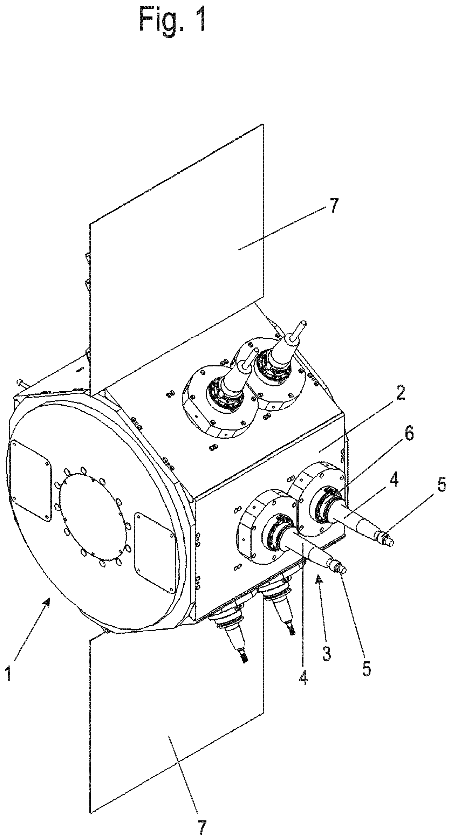

- Figur 1: einen Werkzeugrevolver einer Werkzeugmaschine in einer perspektivischen Ansicht
- Figur 2: einen Querschnitt durch den Werkzeugrevolver nach der Figur 1.

In den Figuren ist ein Werkzeugrevolver, der insgesamt mit dem Bezugszeichen 1 versehen ist, dargestellt, mit im Beispiel zwei Gruppen von Werkzeugen 3, wobei jede Gruppe aus mehreren, in Umfangsrichtung des Werkzeugrevolvers 1 in gleichem Winkelabstand zueinander angeordneten Werkzeugen 3 besteht und die Gruppen in Achsrichtung des Werkzeugrevolvers 1 hintereinander angeordnet sind.

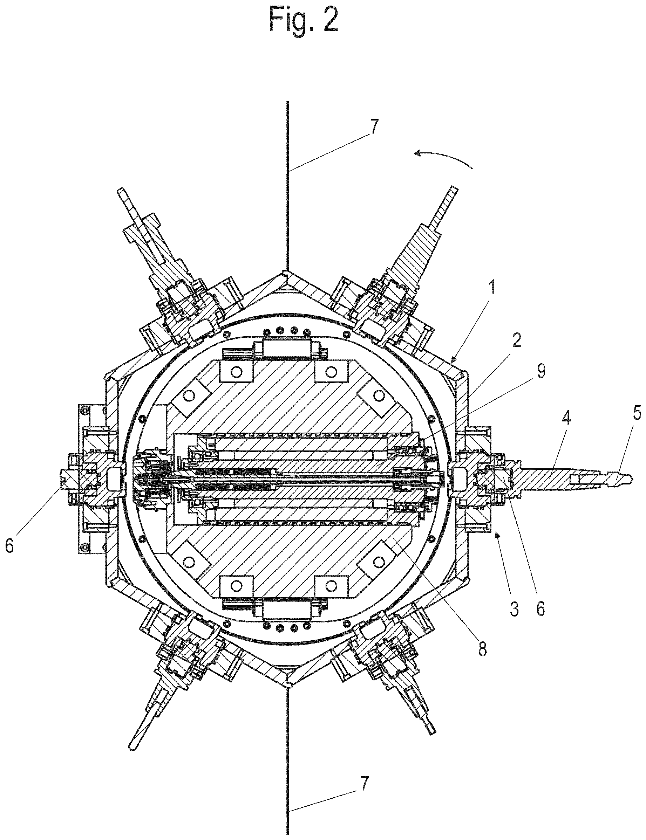

Wie insbesondere die Figur 2 verdeutlicht, weist der Werkzeugrevolver 1 einen zu einem nicht dargestellten Maschinengestell fest positionierten Träger 8 auf, der von einer die Werkzeuge 3 tragenden Trommel umgeben ist, die gegenüber dem Träger 8 quer zur Drehachse verstellbar und in Umfangsrichtung, gekennzeichnet durch einen Pfeil in Figur 2, taktweise verdrehbar ist.

Im Träger 8 ist ein Antriebsmotor 9 gelagert, der je nach Stellung der Trommel 2 und der daran gehaltenen Werkzeuge 3 mit einem der Werkzeuge 3 in Eingriff bringbar ist. Dabei ist jeder Gruppe von Werkzeugen 3 ein Antriebsmotor 9 zugeordnet.

Jedes Werkzeug 3 besteht aus einer Werkzeugspindel 4 und einem daran befestigten Spanwerkzeug 5, wobei das Werkzeug 3 durch den Antriebsmotor 9 rotierend antreibbar ist.

Gemäß der Erfindung erfolgen gleichzeitig folgende Verfahrensschritte:
- ein Werkzeug 3 steht in Bearbeitungseingriff mit einem Werkstück
- ein dazu benachbartes nicht in Bearbeitungseingriff stehendes weiteres Werkzeug 3 einer Gruppe wird aus einem eine Werkzeugaufnahme bildenden Adapter 6 entnommen,
- die dazu benachbarte Werkzeugaufnahme gereinigt und
- eine dazu benachbarte gereinigte Werkzeugaufnahme wird mit einem Werkzeug 3 erneut bestückt.

Der jeweilige Adapter 6 wird vor dem Einsetzen eines neuen Werkzeugs 3 auf die zur spanenden Bearbeitung erforderliche Umdrehungszahl gebracht und zum Entnehmen des Werkzeugs 3 abgebremst.

In den Figuren ist weiterhin erkennbar, dass im Bereich des Werkzeugrevolvers 1 Trennwände 7 vorgesehen sind, die einen Spritzschutz bilden und einerseits einen Bearbeitungsraum und andererseits einen diesem gegenüber hermetisch abgedichteten Reinigungsraum bilden. Im vorliegenden Fall ist der Reinigungsraum dem Bearbeitungsraum in Drehrichtung der Trommel 2 nachgeordnet.

In dem in der Figur 2 rechts der Trennwände 7 erkennbaren Bearbeitungsraum ist ein Werkzeug 5 spanend im Bearbeitungseinsatz, während das in Drehrichtung nachfolgende Werkzeug 5 bzw. der diesem zugeordnete Adapter 6 vom Antriebsmotor 9 entkoppelt wird. Das entkoppelte Werkzeug 5 bzw. der Adapter 6 wird bis zum Stillstand abgebremst.

Im nachfolgenden Reinigungsraum, der linksseitig der Trennwände 7 angeordnet ist, wird das Werkzeug 5 aus dem Adapter 6 entnommen. Der benachbarte Adapter 6 wird gereinigt. In den gereinigten, in Drehrichtung der Trommel 2 gesehen benachbarten Adapter 6 wird ein neues Werkzeug 5 eingesetzt und gleichzeitig oder während des taktweisen Verschwenkens in die Bearbeitungsposition auf die erforderliche Umdrehungszahl gebracht.

## Patentansprüche

1. Verfahren zum Bearbeiten eines Werkstücks mittels in einem taktweise drehbaren Werkzeugrevolver (1) angeordneten Werkzeugen (3), wobei zumindest in einer Ebene quer zur Drehachse des Werkzeugrevolvers (1) zur Bearbeitung mehrere drehbare, jeweils in einem Adapter (6) gehaltene Werkzeuge (3) angeordnet sind, **dadurch gekennzeichnet, dass** gleichzeitig
- ein Werkzeug (3) in Bearbeitungseingriff mit einem Werkstück ist
- ein dazu in Drehrichtung des Werkzeugrevolvers (1) benachbartes, nicht in Bearbeitungseingriff stehendes Werkzeug (3) aus dem Adapter (6) entnommen,
- der dazu, in Drehrichtung des Werkzeugrevolvers (1) gesehen, benachbarte Adapter gereinigt und
- der dazu, in Drehrichtung des Werkzeugrevolvers (1) gesehen, benachbarte gereinigte Adapter (6) mit einem Werkzeug (3) erneut bestückt wird.

2. Verfahren nach Anspruch 1, **dadurch gekennzeichnet, dass** das eingespannte Werkzeug (3) vor einem Bearbeitungseingriff angetrieben und/oder nach dem Bearbeitungseingriff abgebremst wird.

3. Verfahren nach Anspruch 1 oder 2, **dadurch gekennzeichnet, dass** das eingespannte Werkzeug (3) vor einem Bearbeitungseingriff auf eine Enddrehzahl angetrieben und nach dem Bearbeiten bis zum Stillstand abgebremst wird.

4. Verfahren nach einem der vorhergehenden Ansprüche, **dadurch gekennzeichnet, dass** die Reinigung des Adapters (6) mit Druckluft erfolgt.

5. Werkzeugmaschine zur Durchführung des Verfahrens nach Anspruch 1, mit mindestens einem um seine Längsachse verdrehbaren Werkzeugrevolver (1), der mindestens eine Gruppe von in Umfangsrichtung angeordneten, jeweils ein Werkzeug (3) aufnehmende lösbare Werkzeugspindeln (4) aufweist, **dadurch gekennzeichnet, dass** im Bereich des Werkzeugrevolvers (1) zumindest eine Trennwand (7) vorgesehen ist, unter Bildung eines Bearbeitungs- und eines Reinigungsraumes, wobei im Bearbeitungsraum eine Bearbeitungstation und eine Werkzeugwechselstation vorgesehen sind, und im Reinigungsraum eine Reinigungsstation vorgesehen ist.

6. Werkzeugmaschine nach Anspruch 5, **dadurch gekennzeichnet, dass** der Reinigungsraum in Drehrichtung des Werkzeugrevolvers (1) dem Bearbeitungsraum nachgeordnet ist.

7. Werkzeugmaschine nach Anspruch 5, **dadurch gekennzeichnet, dass** dem Werkzeugrevolver (1) ein Werkzeugwechsler zugeordnet ist.

## Claims

1. Method for machining a workpiece by means of tools (3) arranged in a tool turret (1) which can be rotated in cycles, wherein a plurality of rotatable tools (3), each held in an adapter (6), are arranged for machining at least in a plane transverse to the axis of rotation of the tool turret (1), **characterized in that** simultaneously
- a tool (3) is in machining engagement with a workpiece,
- a tool (3) adjacent thereto in the direction of rotation of the tool turret (1) and not in machining engagement is removed from the adapter (6),
- the adapter adjacent thereto, as seen in the direction of rotation of the tool turret (1), is cleaned, and
- the cleaned adapter (6) adjacent thereto, as seen in the direction of rotation of the tool turret (1), is reloaded with a tool (3).

2. Method according to claim 1, **characterized in that** the clamped tool (3) is driven before a machining engagement and/or braked after the machining engagement.

3. Method according to claim 1 or 2, **characterized in that** the clamped tool (3) is driven to a final speed before a machining engagement and is braked to a standstill after the machining operation.

4. Method according to one of the preceding claims, **characterized in that** the cleaning of the adapter (6) is carried out with compressed air.

5. Machine tool for carrying out the method according to claim 1, having at least one tool turret (1) which can be rotated about its longitudinal axis and has at least one group of releasable tool spindles (4) which are arranged in the circumferential direction and each receive a tool (3), **characterized in that** at least one partition wall (7) is provided in the region of the tool turret (1), forming a machining space and a cleaning space, wherein a machining station and a tool changing station is provided in the machining space, and a cleaning station is provided in the cleaning space.

6. Machine tool according to claim 5, **characterized in that** the cleaning space is arranged downstream of the machining space in the direction of rotation of the tool turret (1).

7. Machine tool according to claim 5, **characterized in that** a tool changer is assigned to the tool turret (1).

## Revendications

1. Procédé pour l'usinage d'une pièce d'oeuvre au moyen d'outils (3) disposés dans une tourelle porte-outils (1) capable de tourner de façon cadencée, dans lequel sont disposés plusieurs outils (3) retenus chacun dans un adaptateur (6) et capables de tourner au moins dans un plan transversal par rapport à l'axe de rotation de la tourelle porte-outils (1) en vue de l'usinage, **caractérisé en ce que**, simultanément,
- un outil (3) est en contact avec une pièce pour l'usiner,
- un outil (3) voisin dans le sens de rotation de la tourelle porte-outils (1), qui n'est pas en contact avec la pièce pour l'usiner, est retiré de l'adaptateur (6),
- l'adaptateur voisin dans le sens de rotation de la tourelle porte-outils (1) est nettoyé et
- l'adaptateur (6) voisin dans le sens de rotation de la tourelle porte-outils (1) est équipé d'un nouvel outil (3).

2. Procédé selon la revendication 1, **caractérisé en ce que** l'outil (3) serré est entraîné avant le contact pour l'usinage et/ou freiné après le contact pour l'usinage.

3. Procédé selon la revendication 1 ou 2, **caractérisé en ce que** l'outil (3) serré est entraîné à une vitesse de rotation finale avant le contact pour l'usinage et freiné jusqu'à l'arrêt après l'usinage.

4. Procédé selon l'une des revendications précédentes, **caractérisé en ce que** le nettoyage de l'adaptateur (6) est effectué à l'air comprimé.

5. Machine-outil pour la mise en œuvre du procédé selon la revendication 1, avec au moins une tourelle porte-outils (1) capable de rotation autour d'un axe longitudinal, qui comprend au moins un groupe de broches porte-outil (4) amovibles recevant les outils (3), **caractérisée en ce qu'**est prévue au niveau de la tourelle porte-outils (1) au moins une cloison de séparation (7) formant un espace d'usinage et un espace de nettoyage, l'espace d'usinage contenant un poste d'usinage et un poste de changement d'outil et l'espace de nettoyage contenant un poste de nettoyage.

6. Machine-outil selon la revendication 5, **caractérisée en ce que** l'espace de nettoyage est disposé après l'espace d'usinage dans le sens de rotation de la tourelle porte-outils (1).

7. Machine-outil selon la revendication 5, **caractérisé en ce qu'**un changeur d'outil est associé à la tourelle porte-outils (1).
